# EUROPÄISCHE PATENTSCHRIFT

(11) **EP 0 865 471 B1**
(45) Veröffentlichungstag und Bekanntmachung des Hinweises auf die Patenterteilung: **28.06.2000**
(21) Anmeldenummer: 96939837.9
(22) Anmeldetag: 18.11.1996
(51) Int. Cl.: C09D 167/06, C08G 63/91

(54) **VERFAHREN ZUR HERSTELLUNG WÄSSRIGER STRAHLENHÄRTBARER LACKE**
METHODS OF PRODUCING AQUEOUS RADIATION-HARDENED PAINTS
PROCEDE POUR PRODUIRE UNE PEINTURE AQUEUSE DURCISSANT AUX RAYONNEMENTS

(30) Priorität: 04.12.1995 DE 19545125
(43) Veröffentlichungstag der Anmeldung: 23.09.1998
(73) Patentinhaber: BASF Coatings Aktiengesellschaft, 48165 Münster (DE)
(72) Erfinder: KRANIG, Wolfgang, D-48308 Senden (DE); SEIDEMANN, Rolf, D-48163 Münster (DE); DICKERHOF, Karl-Heinz, D-48317 Drensteinfurt (DE); PRIETO, Jorge, D-48165 Münster (DE)
(74) Vertreter: Fitzner, Uwe, Dr.
(86) Internationale Anmeldenummer: EP9605077
(87) Internationale Veröffentlichungsnummer: WO9720896

(56) Entgegenhaltungen:
- EP-A- 0 680 985
- US-A- 4 675 374

## Beschreibung

### Gebiet der Erfindung

Die Erfindung betrifft ein Verfahren zur Herstellung wäßriger strahlenhärtbarer Lacke aus wasserunverträglichen strahlenhärtbaren Praelacken A), die (a) mindestens ein oligomeres und/oder polymeres wasserunverträgliches Bindemittel mit mindestens zwei ethylenisch ungesättigten Gruppen pro Molekül, (b) gegebenenfalls Füllstoffe und/oder Pigmente, (c) gegebenenfalls Photoinitiatoren und (d) gegebenenfalls weitere Hilfsmittel und/oder Additive enthalten, dadurch gekennzeichnet, daß der wasserunverträgliche strahlenhärtbare Praelack A) in einer 1. Stufe mit 0,2 bis 5 Gew.-%, vorzugsweise 1 bis 3 Gew.-%, bezogen auf den Lack, mindestens eines Di- und/oder Polyamins B) mit mindestens einer primären und/oder sekundären und mindestens einer tertiären Aminogruppe, umgesetzt wird, in einer 2. Stufe die Aminogruppen der Komponente B) mit einer Säure neutralisiert werden und in einer 3. abschließenden Stufe der in den Stufen 1 und 2 hergestellte wasserlösliche Lack mit Wasser in die wäßrige Phase überführt wird, wobei gleichzeitig die Applikationsviskosität eingestellt wird.

### Stand der Technik

Strahlenhärtbare Beschichtungsmittel auf der Basis von Acrylsäureestern sind bekannt.

Aus der DE-PS 26 25 538 sind photopolymerisierbare Überzugsmassen bekannt, die als Reduktionsmittel bzw. kettenübertragende Verbindungen Amine enthalten. Die Verwendung eines solches freien Amins hat den Nachteil, daß dieses als Weichmacher wirken kann sowie zu einem unerwünschten Belag auf der Oberfläche und zu Geruchsbelästigungen führt.

Durch Einbau der Aminogruppe in ein Molekül, das noch polymerisationsfähige Gruppen enthält, wird ein bei der Härtung einpolymerisiertes Amin erhalten, das die obengenannten Nachteile nicht aufweist. Eine bekannte Methode des Einbaus ist die Addition von Aminen an doppelbindungsreiche Moleküle, die analog einer Michael-Addition verläuft und die beispielsweise in F. Möller, Houben-Weyl, Bd. 11/1 (1957), Seiten 277 bis 280, beschrieben ist. Die US-PS 2,759,913 lehrt die Anlagerung von Aminen an aktivierte, olefinisch ungesättigte Verbindungen, wie Acrylate, in äquimolaren Mengen, die zur vollständigen Umsetzung der aktivierten ethylenischen Doppelbindungen führt. Systematische Untersuchungen über die Anlagerung von Aminoalkoholen an Acrylate wurden von N. Ogata und T. Asahara, Bull. Chem. Soc. Jap. 39, Seiten 1486 bis 1490, 1966, durchgeführt.

Aus der EP-A-0 280 222 sind Additionsprodukte aus Estern der Acryl- oder Methacrylsäure und mehrwertigen Alkoholen mit primären Monoaminen bekannt, wobei das Molverhältnis von Monoamin zu (meth)acrylischer Doppelbindung des Esters 0,05 : 1 bis 0,4 : 1 beträgt. Die Additionsprodukte gemäß der EP-A-0 280 222 werden in strahlungshärtbaren Massen eingesetzt, die an der Luft aushärten. Die Lagerstabilität der aus der EP-A-0 280 222 bekannten Produkte ist jedoch unzureichend. So ist bei Lagerung der Additionsprodukte ein deutlicher Viskositätsanstieg zu verzeichnen. Weiterhin treten Verträglichkeitsprobleme bei Additionsprodukten aus vierwertigen Polyolen mit den primären Monoaminen auf.

Derartige Produkte sind trübe bzw. haben ein milchigweißes Aussehen. Nachteilig ist außerdem bei den in der EP-A-0 280 222 beschriebenen aminmodifizierten Massen, daß ein relativ hoher Anteil an Monoamin notwendig ist, um in den erhaltenen Additionsprodukten für beispielsweise mit Benzophenon initiierte Systeme ausreichend hohe Stickstoffgehalte zu gewährleisten. Ausreichend hohe Stickstoffgehalte sind nötig, um bei üblicher Strahlendosis für eine in der Praxis ausreichende und vollständig verlaufende Photopolymerisation zu sorgen.

Aus den US-Patentschriften Nr. 4,547,562 und 4,675,374 sind strahlenhärtbare lösungsmittelfreie Zusammensetzungen bekannt auf Basis von Polyacrylaten und Mono-, Di- oder Polyaminen. Als geeignete Di- und Polyamine werden Spezies mit mehr als einer primären Aminogruppe genannt. Bei Verwendung dieser Polyamine werden hochvernetzte, höhermolekulare und damit höherviskose Überzugsmassen erhalten, die ohne Zusatz von Reaktivverdünnern und Lösungsmitteln eine zu hohe Applikationsviskosität aufweisen oder sogar zu festen Produkten führen.

Die US-PS 4,045,416 und US-PS 3,845,056 betreffen strahlenhärtbare Überzugsmittel auf Basis von Aminacrylaten, welche erhalten werden durch Umsetzung von Polyacrylaten mit Aminen mit mindestens einem Amin-Wasserstoff. Als geeignete Amine werden primäre und sekundäre Monoamine sowie Polyamine genannt. Gemäß den US-Patenten werden als Polyaminkomponenten Polyamine mit mehr als einer primären Aminogruppe, Polyamine mit ausschließlich sekundären Aminogruppen oder Polyamine mit sekundären und tertiären Aminogruppen genannt. Bei Verwendung von Polyaminen mit mehr als einer primären Aminogruppe werden inhomogene Additionsprodukte mit geringer Lagerstabilität erhalten, die Verwendung von Polyaminen mit ausschließlich sekundären Aminogruppen, wie beispielsweise Piperazin, führt zu inhomogenen Gemischen auf Grund ungenügender Reaktivitäten oder von Unverträglichkeiten. Die Verwendung von Polyaminen mit sekundären und tertiären Aminogruppen führt nur zu einer Verminderung der Acrylsäure- bzw. Methacrylsäureesterfunktionalität des Moleküls.

In neuerer Zeit ist ein starkes Bedürfnis nach strahlenhärtbaren Beschichtungsmitteln entstanden, die lösemittelfrei sind und die gleichzeitig gute Reaktivität und eine gute Verarbeitungsviskosität aufweisen, möglichst in Abwesenheit von Reaktivverdünnern.

### Aufgabe und Lösung

Die daraus resultierende Aufgabe bestand daher darin, die zuvor beschriebenen Nachteile zu überwinden und lösemittelfreie strahlenhärtbare Lacke zur Verfügung zu stellen, die eine ausreichende Lagerstabilität, eine gute Reaktivität, eine niedrige Viskosität und vergleichweise gute resultierende Filmeigenschaften, wie insbesondere Filmhärte, aufweisen.
Weiterhin sollte, insbesondere aus ökologischen Gründen, auf die Verwendung von Monomerzusätzen, oder sogenannten Reaktiwerdünnern, ebenso wie auf die Zugabe von organischen Lösemitteln weitgehend verzichtet werden.
Die resultierende Beschichtung sollte eine gute Haftung, auf den Untergründen, insbesondere auf kritischen Untergründen, wie beispielsweise folienbeschichteten Preßhölzern oder auf Kunststoffen, wie Polyvinylchlorid oder Polypropylen, aufweisen.

Überraschenderweise wurde gefunden, daß übliche wasserunverträgliche, im allgemeinen hochviskose strahlenhärtbare Praelacke A), enthaltend
(a) 40 bis 100 Gew.-%, bevorzugt 50 bis 95 Gew.-%, mindestens eines wasserunverträglichen oligomeren und/oder polymeren Bindemittels mit mindestens zwei ethylenisch ungesättigten Gruppen pro Molekül,
(b) 0 bis 40 Gew.-%, bevorzugt 0 bis 30 Gew.-%, Füllstoffe und/oder Pigmente,
(c) 0 bis 6 Gew.-%, bevorzugt 3 bis 5 Gew.-%, Photoinitiatoren in UV-Anwendungen, sowie
(d) 0 bis 20 Gew.-%, bevorzugt 0 bis 15 Gew.-%, weitere Hilfsmittel und/oder Additive,
in wäßrige strahlenhärtbare Lacke mit hervorragenden Eigenschaften überführt werden können.

Das erfindungsgemäße Verfahren umfaßt folgende aufeinanderfolgende Stufen:
1. Versetzen des vorformulierten wasserunverträglichen Praelacks A) mit 0,2 bis 5 Gew.-%, vorzugsweise 1 bis 3 Gew.-%, bezogen auf den Praelack A), eines Di- und/oder Polyamins B) mit mindestens einer primären und mindestens einer tertiären Aminogruppe,
2. Neutralisation der Aminogruppen der Komponente B) mit einer Säure, sowie
3. Überführung des in den Stufen 1 und 2 hergestellten wasserlöslichen Lacks in die wäßrige Phase und
Einstellen der gewünschten Applikationsviskosität durch Zugabe von Wasser.

In einer weiteren Ausführungsform der Erfindung wird in der 1. Stufe des erfindungsgemäßen Verfahrens der wasserunverträgliche Praelack A) aus den Komponenten (a) bis (d) formuliert bei gleichzeitiger Zugabe von 0,2 bis 5 Gew.-%, vorzugsweise 1 bis 3 Gew.-%, bezogen auf den Praelack A), der Komponente B).

In einer bevorzugten Ausführungsform der Erfindung erfolgt die Neutralisation der Aminogruppen (Stufe 2) und das Einstellen der gewünschten Applikationsviskosität (Stufe 3) in einer Stufe unter Verwendung einer verdünnten wäßrigen Säure.

Bevorzugt sind als Di- und/oder Polyamine B) Diamine mit einer primären und tertiären Aminogruppe.

### Durchführung der Erfindung

### Die Komponenten des wasserunverträglichen Praelacks A)

Die Wasserunverträglichkeit des Praelacks A) ist durch eine Löslichkeit des Praelacks A), insbesondere des wasserunverträglichen Bindemittels (a), bei Raumtemperatur in Wasser von < 10 Gew.-%, bevorzugt < 5 Gew.-%, bezogen auf die wäßrige Formulierung, definiert.

Die oligomeren und/oder polymeren wasserunverträglichen Bindemittel (a) sind in Anteilen zwischen 40 und 100 Gew.-%, vorzugsweise zwischen 50 und 95 Gew.-%, bezogen auf den Praelack A), im Praelack A) enthalten. Oligomere wasserunverträgliche Bindemittel (a) sind beispielsweise die Ester der Acrylsäure und/oder der Methacrylsäure mit zweiwertigen aliphatischen Alkoholen, wie Ethylenglykol, Propylenglykol-1,2 und -1,3, Butandiol-1,4, Pentandiol-1,2, Neopentylglykol, Hexandiol-1,6, 2-Methylpentandiol-1,5, 2-Ethylbutandiol-1,4, Dimethylolcyclohexan und Diethylenglykol, vorzugsweise mit dreiwertigen Alkoholen, wie Glycerin, Trimethylolethan, Trimethylolpropan und Trimethylolbutan, vorzugsweise mit vierwertigen Alkoholen, wie Pentaerythrit, sowie vorzugsweise mit höherwertigen Alkoholen, wie Di(trimethylolpropan), Di(pentaerythrit) und Sorbitol. Weiterhin sind mehrwertige cycloaliphatische Alkohole, wie beispielsweise 1,4-Bis-(hydroxymethyl)-cyclohexan, mehrwertige araliphatische Alkohole, wie 1,3-Xylylendiol sowie mehrwertige Phenole wie 2,2-Bis-(4-hydroxyphenyl)-propan (Bisphenol-A) geeignet.
Bevorzugte polymere wasserunverträgliche Bindemittel (a) werden beispielsweise erhalten durch die Umsetzung der oben aufgeführten mehrwertigen Alkohole vor der Veresterung mit Acrylsäure oder Methacrylsäure durch Alkoxylierung mit z.B. Ethylenoxid oder Propylenoxid in höhermolekulare Polyetheralkohole überführt.
Die hydroxylgruppenhaltigen Polyether, die mit Acrylsäure und/oder Methacrylsäure verestert werden, werden durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963)) erhalten. Einsetzbar sind auch Polymerisationsprodukte des Tetrahydrofurans oder Butylenoxids. Als polymere wasserunverträgliche Bindemittel (a) kommen auch Polyesteracrylate und/oder Polyestermethacrylate in Frage. Zur Herstellung der Polyester(meth)acrylate werden als mehrwertige Alkohole hydroxylgruppenhaltige Polyester (Polyesterpolyole) eingesetzt. Diese können durch Veresterung von Dicarbonsäuren mit Diolen und Triolen nach gut bekannten Methoden (vgl. z.B. P.J. Flory, J. Am. Chem. Soc. 58, 1877 (1936) und J. Am. Chem. Soc. 63, 3083 (1953) hergestellt werden.Die Herstellung von Polyetheracrylaten und Polyesteracrylaten ist beispielsweise beschrieben in der DE-A-38 36 370.
Als Bindemittel (a) geeignete Polyether- oder Polyesteracrylate sind beispielsweise die im Handel erhältlichen wasserunverträglichen Laromer® -Typen der BASF AG.
Neben den beschriebenen Polyether- und Polyesteracrylaten können als Bindemittel (a) beispielsweise in oligo- und/oder polymerer Form eingesetzt werden: wasserunverträgliche Urethanacrylate, deren Herstellung beispielsweise in der EP-B-0 167 199 und in der EP-B-0 204 161 beschrieben ist, wasserunverträgliche Epoxidacrylate, die durch Anlagerung von (Meth)acrylsäure an Epoxidharze erhalten werden können und im Handel erhältlich sind, sowie wasserunverträgliche ethylenisch ungesättigte, bevorzugt acryloylgruppenhaltige Acrylatcopolymerisate, die durch Umsetzung eines (Meth)acrylatcopolymerisats erhalten werden, das funktionelle Gruppen, wie beispielsweise Hydroxyl-, Carboxyl-, Amino-, Thiol-, Epoxid- und/oder Isocyanatgruppen aufweist, mit Verbindungen, die mindestens eine ethylenisch ungesättigte Doppelbindung sowie eine gegenüber den funktionellen Gruppen des (Meth)acrylatcopolymerisats reaktionsfähige Gruppe aufweisen.

Die in den wasserunverträglichen Praelacken A) gegebenenfalls in Mengen von 0 bis 40 Gew.-%, vorzugsweise 0 bis 30 Gew.-%, bezogen auf den Praelack A), anwesenden Füllstoffe und/oder Pigmente (b), können anorganische und/oder organische Materialien sein.
Beispielhaft für anorganische Füllstoffe und/oder Pigmente seien genannt: Titandioxide, Sulfate, wie beispielsweise Bariumsulfate (Schwerspat) oder Kaliumsulfate (Leichtspat) oder Silikate, wie beispielsweise Kaoline, Glimmer oder Quarzmehl. Bei den anorganischen Füllstoffen und/oder Pigmenten (d) ist zu berücksichtigen, daß die begriffliche Unterscheidung zwischen "Füllstoff" und "Pigment" oftmals nur schwer möglich ist, da Stoffe, wie beispielsweise Bariumsulfat oder Titandioxid, gleichzeitig als Füllstoff und Pigment wirken.
Als organische Füllstoffe und/oder Pigmente seien beispielhaft und stellvertretend für viele genannt: Ruße, Azofarbstoff-Pigmente oder Phthalocyaninfarbstoff-Pigmente.
Bevorzugter Bestandteil der Komponente (b) sind Mattierungsmittel.
Als Mattierungsmittel werden im allgemeinen Teilchen mit hoher Dimensionsstabilität, vorzugsweise mit einer Teilchengröße von zwischen 1 und 15 Mikrometer, nicht jedoch über 50 Mikrometer, und einer vergleichsweise engen Teilchengrößenverteilung, da größere Teilchen zu Unregelmäßigkeiten in der Lackoberfläche führen, sowie mit einer relativ niedrigen Dichte, die zum Aufschwimmen der Mattierungsmittel während des Filmbildungsprozesses beim Lackieren führt, eingesetzt.
Bevorzugt werden als Mattierungsmittel poröse Schichtsilikate mit einem großen Porenvolumen und einer entsprechend niedrigen Dichte eingesetzt. Beispielhaft für solche Schichtsilikate seien die Syloid® -Typen der Firma Grace genannt, die mittlere Teilchengrößen von vorzugsweise zwischen 1 und 10 Mikrometern aufweisen. Weiterhin können als Mattierungsmittel Kunststoffteilchen, die den oben genannten Anforderungen genügen, eingesetzt werden. Bevorzugt werden Polyamid-Teilchen verwendet, wie z.B. Orgasol® -Typen der Firma Atochem, die Teilchengrößen zwischen 1 und 10 Mikrometern, eine hohe Glastemperatur zur Gewährleistung der Dimensionsstabilität sowie ein großes Porenvolumen aufweisen. Bevorzugt werden gemeinsam mit dem Mattierungsmittel Paraffinwachse eingesetzt, die vor dem Einarbeiten des Mattierungsmittels in die wäßrige Lackformulierung dieser zugesetzt werden und/oder gemeinsam mit dem Mattierungsmittel in die Lackformulierung eingearbeitet werden. Solche Paraffinwachse belegen vorzugsweise die Oberfläche der Mattierungsmittel-Teilchen, was zu einer nochmaligen Verringerung der Dichte der Teilchen und zu einer Hydrophobierung der Teilchen führt.

Die wasserunverträglichen Praelacke A) enthalten gegebenenfalls als Komponente (c) in Anteilen von 0 bis 6 Gew.-%, bevorzugt 3 bis 5 Gew.-%, bezogen auf den Praelack (A), übliche in strahlenhärtbaren Überzugsmitteln eingesetzte Photoinitiatoren, beispielsweise Benzophenone, Benzoine oder Benzoinether, bevorzugt Benzophenon in UV-Zubereitungen. Auf die Verwendung von Synergisten kann verzichtet werden, da die in den Praelacken A) eingesetzten Bindemittel (a) gemäß dem erfindungsgemäßen Verfahren aminmodifiziert sind und damit eine synergistische Wirkung aufweisen.

Weiterhin enthalten die wasserunverträglichen Praelacke A) gegebenenfalls in Mengen von 0 bis 20 Gew.-%, bevorzugt von 0 bis 15 Gew.-%, bezogen auf den Praelack (A), übliche Hilfsmittel und/oder Additive (d), beispielsweise Entschäumer, Verlaufsmittel, filmbildende Hilfsmittel, z.B. Cellulose-Derivate, Gleitmittel, sowie in untergeordneten Mengen von bis zu 10 Gew.-% Lösemittel, bezogen auf den Praelack A), wie beispielsweise Methoxypropanol. Die Gleitmittel können beispielsweise in Anteilen von 0,5 bis 3 Gew.-%, die Verlaufsmittel in Anteilen von 0,2 bis 1 Gew.-%, bezogen auf den Praelack A), im Praelack A) anwesend sein.

### Die Komponente B)

Als Komponente B) werden Di- und/oder Polyamine mit einer primären und einer tertiären Aminogruppe eingesetzt, beispielsweise N,N-Dialkyldiaminoalkane, wie z.B. N,N-Dimethyl-1,3-diaminopropan, welches durch katalytische Hydrierung von Dimethylaminopropionitril erhältlich ist. Die Herstellung dieses Diamins ist beispielsweise beschrieben in Houben-Weyl, Bd 11/1, 1957, S. 565, in der EP-A-0 316 761 oder in P. Lappe, H. Springer und J. Weber, Chem.-Ztg. 111(4), Seiten 117 bis 125 (1987).
Weitere geeignete Dialkylaminopropane sind N,N-Diethyl-1,3-diaminopropan, N,N-Di-n-propyl-1,3-diaminopropan, 4-Morpholinopropylamin, 3-(N-Piperidinyl)propylamin, N,N-Diphenyl-1,3-diaminopropan.
Als Komponente B) kommen weiterhin in Frage: N,N-Dialkyl-1,2-diaminoethan-Derivate, wie beispielsweise Dimethylaminoethylamin, Diethylaminoethylamin, N-beta-Aminoethylmorpholin (Herstellung siehe z.B. Houben Weyl, Bd. 11/1, 1957, S. 563), N,N-Dialkyl-1,5-diaminopentan-Derivate, die herstellbar sind durch 1,4-Addition von sekundären Aminen an 1-Cyanbutadien-1,3 unter Bildung der Nitrile und anschließender katalytischer Hydrierung (Herstellung siehe Houben-Weyl, Bd. 11/1, 1957, S. 276). Beispiele für geeignete N,N-Dialkyl-1,5-diaminopentan-Derivate sind Dimethylaminopentylamin, Diethylaminopentylamin, 4-Morpholinopentylamin.
Besonders bevorzugt als Aminkomponente B) ist N,N-Dimethyl-1,3-diaminopropan.

### Das erfindungsgemäße Verfahren

Das erfindungsgemäße Verfahren umfaßt die aufeinanderfolgende Stufen:
1. Versetzen des vorformulierten wasserunverträglichen Praelacks A) mit 0,2 bis 5 Gew.-%, bevorzugt 1 bis 3 Gew.-%, bezogen auf den Lack A), der Komponente B),
2. Neutralisation der Aminogruppen der Komponente B) mit einer Säure, sowie
3. Überführung des in den Stufen 1 und 2 hergestellten wasserlöslichen Lacks in die wäßrige Phase und Einstellen der gewünschten Applikationsviskosität durch Zugabe von Wasser.

In einer bevorzugten Ausführungsform der Erfindung erfolgt die Neutralisation der tertiären Aminogruppen der Komponente B) (Stufe 2) und die Einstellung der gewünschten Applikationsviskosität (Stufe 3) in einer Stufe unter Verwendung einer verdünnten wäßrigen Säure.

In Stufe 1 des erfindungsgemäßen Verfahrens wird die Zugabe der Komponente B) zum vorformulierten wasserunverträglichen Praelack A) in flüssiger Phase unter Rühren vorzugsweise bei Raumtemperatur durchgeführt. Die Temperatur kann dabei auf etwa 40 Grad C ansteigen. Durch Erhöhung der Temperatur kann die Einarbeitung der Komponente B) beschleunigt werden.
Wegen der Reproduzierbarkeit sollte die Einarbeitung möglichst vollständig ablaufen, was bei Temperaturen über 40 Grad C innerhalb weniger Stunden erreicht wird. Die Viskosität der erhaltenen Mischung aus A) und B) ist dann zeitlich konstant.
Die Umsetzung wird im allgemeinen ohne Lösemittel durchgeführt, aber es können auch Lösemittel angewandt werden, insbesondere um feste Di- und/oder Polyamine B) als Lösung zuzudosieren. Das Lösemittel kann dann nach erfolgter Michael-Addition entfernt werden.
Damit bei der Additionsreaktion keine unerwünschte Polymerisation stattfindet, werden dem Reaktionsgemisch in der 1. Stufe im allgemeinen Polymerisationsinhibitoren zugesetzt. Zu den geeigneten Polymerisationsinhibitoren gehören bekannte Produkte, wie substituierte Phenole, wie 2,6-Di-tert.-butyl-p-kresol, Hydrochinone, wie Methylhydrochinone, und Thioether, wie Thiodiglykol oder Phenothiazin.

In der 2. Stufe der erfindungsgemäßen Verfahrens wird das in der 1. Stufe hergestellte Gemisch aus den Komponenten A) und B) durch Neutralisation, insbesondere der tertiären Aminogruppen, mit mindestens einer Säure unter Rühren, vorzugsweise bei Raumtemperatur, in eine wasserverdünnbare Form überführt. Bevorzugt wird die Säure in ihrer wäßrigen Lösung eingesetzt.
Zur Neutralisation der basischen Gruppen geeignete Säuren sind beispielsweise organische Säuren, wie Milchsäure, Essigsäure oder Ameisensäure, oder mineralische Säuren, wie Phosphorsäure oder bevorzugt Salzsäure.

Die 3. Stufe des erfindungsgemäßen Verfahrens umfaßt die Überführung des in den Stufen 1 und 2 hergestellten wasserlöslichen Lacks in die wäßrige Phase und das Einstellen der gewünschten Applikationsviskosität mit Wasser unter Rühren, vorzugsweise bei Raumtemperatur. Die einzustellenden Applikationsviskositäten der resultierenden wäßrigen strahlenhärtbaren Lacke sind im allgemeinen von der jeweiligen Anwendung abhängig. So können niedrige Viskositäten für spritzfähige Lacke ebenso realisiert werden, wie höhere Viskositäten, die zur Walzapplikation des Lacks benötigt werden.

In einer Variante des erfindungsgemäßen Verfahren werden die Stufe 2 (Neutralisation der Aminogruppen der Komponente B)) und die Stufe 3 (Überführung der in den Stufen 1 und 2 hergestellten wasserlöslichen Lacke in die wäßrige Phase sowie das Einstellen der gewünschten Applikationsviskosität mit Wasser) durch die Verwendung geeigneter Verdünnungen der Säuren mit Wasser in einer Stufe zusammengefaßt.

In einer weiteren Ausführungsform der Erfindung wird in der 1. Stufe die Komponente B) in Anteilen von 0,2 bis 5 Gew.-%, bevorzugt von 1 bis 3 Gew.-%, bezogen auf die Summe der Bestandteile (a) bis (d) des Praelacks A), schon bei der Formulierung des Praelacks A) aus den Komponenten (a) bis (d) zugegeben.

Dieser modifizierten 1. Stufe schließen sich die schon beschriebenen Stufen 2 (Neutralisation der tertiären Aminogruppen der Komponente B)) und 3 (Überführung des in den Stufen 1 und 2 hergestellten wasserlöslichen Lacks in die wäßrige Phase sowie das Einstellen der gewüschten Applikationsviskosität mit Wasser) an. Wie oben beschrieben können die Stufen 2 und 3 auch hier zu einer Stufe zusammengefaßt werden.

### Die Anwendung der nach dem erfindungsgemäßen Verfahren hergestellten wäßrigen, strahlenhärtbaren Lacke

Die nach dem erfindungsgemäßen Verfahren hergestellten waßrigen, strahlenhärtbaren Lacke können durch Spritzen, Walzen, Fluten, Tauchen, Rakeln, Streichen, Gießen oder durch Vakumat-Applikation auf das Substrat, vorzugsweise auf Glas, Holz, auf Holzwerkstoffe oder auf Papier, aufgebracht werden.

Die Härtung der Lackfilme erfolgt direkt nach dem Auftragen oder nach dem Verdunsten des anwesenden Wassers mittels UV- oder Elektronenstrahlen. Die Anlagen und Bedingungen für diese Härtungsmethoden sind aus der Literatur bekannt (vgl. z.B. R. Holmes, U.V. and E.B. Curing Formulations for Printing Inks, Coatings and Paints, SITA-Technology, Academic Press, London, United Kingdom 1984, Seiten 79 bis 111) und bedürfen keiner weiteren Beschreibung.

Die nach dem erfindungsgemäßen Verfahren hergestellten Lacke eignen sich auch als Druckfarben.

Die nach dem erfindungsgemäßen Verfahren hergestellten wäßrigen, strahlenhärtbaren Lacke weisen eine ausgezeichnete Lagerstabilität auf. Sie sind homogen, haben eine gute Strahlenhärtbarkeit, und sie führen nach der Strahlenhärtung zu Filmen mit ausgezeichneten Eigenschaften.

Die erfindungsgemäßen wäßrigen Lacke sind besonders als Decklacke auf Glas, Holz, Papier, Kunststoffen oder grundierten Substraten aller Art geeignet und können insbesondere auch als grundierende Formulierungen für Glas, Holz, Papier und Kunststoff verwendet werden.

Nachfolgend wird die Erfindung anhand von Ausführungsbeispielen näher erläutert. Teile bedeuten Gewichtsteile, sofern nichts anderes angegeben wird.

### Beispiele:

### Beispiel 1: Erzeugung eines wasserverträglichen stumpfmatten Lacks aus einem wasserunverträglichen Praelack A1)

Der wasserunverträgliche Praelack A1) wird hergestellt durch Mischen der Komponenten:
(a):58,00 Teile Polyetheracrylat (Laromer® P033F der Firma BASF AG),
(b):12,00 Teile Schichtsilikat Syloid® ED 50 der Firma Grace als Mattierungmittel,
(c): 3,00 Teile Benzophenon (Irgacure® 500 der Firma Ciba), sowie
(d): 2,00 Teile Oberflächenhilfsmittel (Lanco Wax® 1362D der Firma Langer & Co.),
   0,30 Teile Entschäumungsmittel (Byk® 022 der Firma Byk) und
   0,30 Teile Entschäumungsmittel (Byk® 024 der Firma Byk).

Anschließend an die Herstellung des wasserunverträglichen Praelacks A1) werden in der 1. Stufe zunächst 2,00 Teile N,N-Dimethyl-1,3-diaminopropan als Komponente B) zugegeben, dann 3 Stunden bei Raumtemperatur gerührt. In den zu einer Stufe zusammengefaßten Stufen 2 und 3 werden abschließend 24,40 Teile einer wäßrigen 3 %igen Salzsäure zugesetzt.
Es resultiert ein homogener Lack, der beim Auftrag zu einer gleichmäßigen Beschichtung führt. Der Glanzgrad einer 12 Mikrometer starken Beschichtung mit dem Lack gemäß Beispiel 1 auf PVC-Substrat (Polyvinylchlorid) nach DIN 67530 bei einem Winkel von 60 Grad beträgt 10 Einheiten.

### Vergleichsbeispiel 1: Dispergierung des wasserunverträglichen Praelacks A1) in wäßriger 3 %iger Salzsäure ohne Erzeugung der Wasserverträglichkeit durch Zugabe der Komponente B)

Zunächst wird ein wasserunverträglicher Praelack A1) gemäß Beispiel 1 hergestellt, der anschließend mit 26,40 Teilen wäßriger 3 %iger Salzsäure versetzt wird. Es resultiert ein inhomogener Lack, der beim Auftrag zu einer ungleichmäßigen Beschichtung führt. Der Glanzgrad einer 12 Mikrometer starken Beschichtung mit dem Lack gemäß Vergleichsbeispiel 1 auf PVC-Substrat nach DIN 67530 bei 60 Grad beträgt 40 bis 60 Einheiten (inhomogen).

### Beispiel 2: Erzeugung eines wasserverträglichen seidenmatten Lacks aus einem wasserunverträglichen Praelack A2)

Der wasserunverträgliche Praelack A2) wird hergestellt durch Mischen der Komponenten:
(a):64,00 Teile Polyetheracrylat (Laromer® P083F der Firma BASF AG),
(b): 6,00 Teile Schichtsilikat Syloid® ED 50 der Firma Grace als Mattierungmittel,
(c): 3,00 Teile Benzophenon (Irgacure® 500 der Firma Ciba), sowie
(d): 1,00 Teile Oberflächenhilfsmittel (Lanco Wax® 1362D der Firma Langer & Co.) und
   1,00 Teile Entschäumungsmittel (Byk® 325 der Firma Byk).

Anschließend an die Herstellung des wasserunverträglichen Praelacks A2) werden in der 1. Stufe zunächst 2,50 Teile N,N-Dimethyl-1,3-diaminopropan als Komponente B) zugegeben, dann 3 Stunden bei 40 Grad C gerührt. In den zu einer Stufe zusammengefaßten Stufen 2 und 3 werden abschließend 25,00 Teile einer wäßrigen 3 %igen Salzsäure zugesetzt.
Es resultiert ein homogener Lack, der beim Auftrag zu einer gleichmäßigen Beschichtung führt. Der Glanzgrad einer 12 Mikrometer starken Beschichtung mit dem Lack gemäß Beispiel 2 auf PVC-Substrat (Polyvinylchlorid) nach DIN 67530 bei 60 Grad beträgt 28 Einheiten

### Vergleichsbeispiel 2: Dispergierung des wasserunverträglichen Praelacks A2) in wäßriger 3 %iger Salzsäure ohne Erzeugung der Wasserverträglichkeit durch Zugabe der Komponente B)

Zunächst wird ein wasserunverträglicher Praelack A2) gemäß Beispiel 1 hergestellt, der anschließend mit 27,50 Teilen wäßriger 3 %iger Salzsäure versetzt wird. Es resultiert ein inhomogener, flockiger Lack, der beim Auftrag zu einer ungleichmäßigen Beschichtung führt. Der Glanzgrad einer 12 Mikrometer starken Beschichtung mit dem Lack gemäß Vergleichsbeispiel 2 auf PVC-Substrat nach DIN 67530 bei 60 Grad beträgt 75 Einheiten (inhomogen).

### Beispiel 3: Erzeugung eines wasserverträglichen Glanzlacks aus einem wasserunverträglichen Praelack A3)

Der wasserunverträgliche Praelack A3) wird hergestellt durch Mischen der Komponenten:
(a):70,00 Teile Polyetheracrylat (Laromer® P084F der Firma BASF AG),
(c): 4,00 Teile Benzophenon (Irgacure® 500 der Firma Ciba), sowie
(d): 1,00 Teile Oberflächenhilfsmittel (Lanco Wax® 1362D der Firma Langer & Co.) und
   1,00 Teile Entschäumungsmittel (Byk® 325 der Firma Byk).

Anschließend an die Herstellung des wasserunverträglichen Praelacks A3) werden in der 1. Stufe zunächst 2,50 Teile N,N-Dimethyl-1,3-diaminopropan als Komponente B) zugegeben, dann 3 Stunden bei 40 Grad C gerührt. In den zu einer Stufe zusammengefaßten Stufen 2 und 3 werden abschließend 24,00 Teile einer wäßrigen 3 %igen Salzsäure zugesetzt.
Es resultiert ein homogener Lack, der beim Auftrag zu einer gleichmäßigen Beschichtung führt. Der Glanzgrad einer 12 Mikrometer starken Beschichtung mit dem Lack gemäß Beispiel 3 auf PVC-Substrat (Polyvinylchlorid) nach DIN 67530 bei 60 Grad beträgt 78 Einheiten

### Vergleichsbeispiel 3: Dispergierung des wasserunverträglichen Praelacks A3) in wäßriger 3 %iger Salzsäure ohne Erzeugung der Wasserverträglichkeit durch Zugabe der Komponente B)

Zunächst wird ein wasserunverträglicher Praelack A3) gemäß Beispiel 3 hergestellt, der anschließend mit 26,50 Teilen wäßriger 3 %iger Salzsäure versetzt wird. Es resultiert ein inhomogener Lack, der beim Auftrag zu einer ungleichmäßigen Beschichtung führt. Der Glanzgrad einer 12 Mikrometer starken Beschichtung mit dem Lack gemäß Vergleichsbeispiel 3 auf PVC-Substrat nach DIN 67530 bei 60 Grad beträgt 72 Einheiten (inhomogen).

## Patentansprüche

1. Verfahren zur Herstellung wäßriger strahlenhärtbarer Lacke aus wasserunverträglichen strahlenhärtbaren Praelacken A), deren Wasserunverträglichkeit durch eine Löslichkeit bei Raumtemperatur in Wasser von < 10 Gew.-% bezogen auf die wäßrige Formulierung definiert ist, enthaltend
(a) 40 bis 100 Gew.-% mindestens eines oligomeren und/oder polymeren wasserunverträglichen Bindemittels mit mindestens zwei ethylenisch ungesättigten Doppelbindungen pro Molekül,
(b) 0 bis 40 Gew.-% Füllstoffe und/oder Pigmente,
(c) 0 bis 6 Gew.-% Photoinitiatoren, sowie
(d) 0 bis 20 Gew.-% weitere Hilfsmittel und/oder Additive,
dadurch gekennzeichnet, daß als aufeinanderfolgende Verfahrensstufen umfaßt sind:
1. Versetzen des vorformulierten wasserunverträglichen Praelacks A) mit 0,2 bis 5 Gew.-%, bezogen auf den Praelack A), eines Di- und/oder Polyamins B) mit mindestens einer primären und mindestens einer tertiären Aminogruppe,
2. Neutralisation der Aminogruppen der Komponente B) im aus Stufe 1. resultierenden Reaktionsprodukt, das durch eine Michael-Addition, während der keine Polymerisation stattfindet, erhalten wird, mit einer Säure, sowie
3. Überführung des in den Stufen 1 und 2 hergestellten wasserlöslichen Lacks in die wäßrige Phase und Einstellen der gewünschten Applikationsviskosität durch Zugabe von Wasser.

2. Verfahren zur Herstellung wäßriger strahlenhärtbarer Lacke aus wasserunverträglichen strahlenhärtbaren Praelacken A), deren Wasserunverträglichkeit durch eine Löslichkeit bei Raumtemperatur in Wasser von < 10 Gew.-% bezogen auf die wäßrige Formulierung definiert ist, enthaltend
(a) 40 bis 100 Gew.-% mindestens eines oligomeren und/oder polymeren wasserunverträglichen Bindemittels mit mindestens zwei ethylenisch ungesättigten Doppelbindungen pro Molekül,
(b) 0 bis 40 Gew.-% Füllstoffe und/oder Pigmente,
(c) 0 bis 6 Gew.-% Photoinitiatoren, sowie
(d) 0 bis 20 Gew.-% weitere Hilfsmittel und/oder Additive,
dadurch gekennzeichnet, daß als aufeinanderfolgende Verfahrensstufen umfaßt sind:
1. Formulierung des Praelacks A) aus den Komponenten (a) bis (d) bei gleichzeitiger Zugabe von 0,2 bis 5 Gew.-%, bezogen auf den Praelack A), eines Di- und/oder Polyamins B) mit mindestens einer primären und mindestens einer tertiären Aminogruppe,
2. Neutralisation der Aminogruppen der Komponente B) im aus Stufe 1. resultierenden Reaktionsprodukt, das durch eine Michael-Addition, während der keine Polymerisation stattfindet, erhalten wird, mit einer Säure, sowie
3. Überführung des in den Stufen 1 und 2 hergestellten wasserlöslichen Lacks in die wäßrige Phase und Einstellen der gewünschten Applikationsviskosität durch Zugabe von Wasser,

3. Verfahren nach einem der Ansprüche 1 oder 2, dadurch gekennzeichnet, daß der wasserunverträgliche Praelack A)
50 bis 95 Gew.-% der Komponente (a),
0 bis 30 Gew.-% der Komponente (b),
3 bis 5 Gew.-% der Komponente (c) und
0 bis 20 Gew.-% der Komponente (d)
enthält.

4. Verfahren nach einem der Ansprüche 1 bis 3, dadurch gekennzeichnet, daß die Verfahrenstufen 2 und 3 zu einer Verfahrensstufe zusammengefaßt sind, wobei sich diese Verfahrensstufe an die Verfahrensstufe 1 anschließt.

5. Verfahren nach einem der Ansprüche 1 bis 4, dadurch gekennzeichnet, daß in der 1, Verfahrensstufe 1 bis 3 Gew.-% der Komponente B), bezogen auf den wasserunverträglichen Praelack A) eingesetzt werden.

6. Verfahren nach einem der Ansprüche 1 bis 5, dadurch gekennzeichnet, daß die Komponente (B) ein Diamin mit einer primären und einer tertiären Aminogruppe ist.

7. Verfahren nach einem der Ansprüche 1 bis 6, dadurch gekennzeichnet, daß die Komponente (B) ein N,N-Dialkylaminoalkylamin ist.

8. Verfahren nach einem der Ansprüche 1 bis 7, dadurch gekennzeichnet, daß die Komponente (B) N,N-Dimethyl-1,3-diaminopropan ist.

9. Verfahren nach einem der Ansprüche 1 bis 8, dadurch gekennzeichnet, daß als wasserunverträgliches Bindemittel (a) Oligomere und/oder Polymere mit mindestens zwei Acrylsäureester- und/oder Methacrylsäureestergruppen pro Molekül als Einheiten mit ethylenisch ungesättigten Doppelbindungen eingesetzt werden.

10. Verfahren nach einem der Ansprüche 1 bis 9, dadurch gekennzeichnet, daß als wasserunverträgliches oligomeres Bindemittel (a) Ester aus Acrylsäure und/oder Methacrylsäure und drei- bis vierwertigen Alkoholen eingesetzt werden,

11. Verfahren nach einem der Ansprüche 1 bis 10, dadurch gekennzeichnet, daß als wasserunverträgliches polymeres Bindemittel (a) Polyetheracrylat, Polyesteracrylat, Polyethermethacrylat und/oder Polyestermethacrylat eingesetzt wird.

12. Wäßrige, strahlenhärtbare Lacke, die gemäß dem Verfahren nach einem der Ansprüche 1 bis 11 herstellbar sind.

13. Verwendung der wäßrigen, strahlenhärtbaren Lacke gemäß Anspruch 12 zur grundierenden und/oder deckenden Lackierung von Glas, Holz, Papier und Kunststoff.

## Claims

1. Process for the preparation of aqueous radiation-curable coating materials from water-incompatible radiation-curable pre-coating materials A), the water-incompatibility of which is defined by a solubility at room temperature in water of < 10% by weight based on the aqueous formulation, comprising
(a) from 40 to 100% by weight of at least one oligomeric and/or polymeric water-incompatible binder having at least two ethylenically unsaturated double bonds per molecule,
(b) from 0 to 40% by weight of fillers and/or pigments,
(c) from 0 to 6% by weight of photoinitiators, and
(d) from 0 to 20% by weight of other auxiliaries and/or additives,
characterized in that successive process stages comprise:
1. adding to the preformulated water-incompatible pre-coating material A) from 0.2 to 5% by weight, based on the pre-coating material A), of a di- and/or polyamine B) having at least one primary and at least one tertiary amino group,
2. neutralizing the amino groups of component B) in the reaction product resulting from stage 1., which is obtained by a Michael addition during which no polymerization takes place, with an acid, and
3. transferring the water-soluble coating material prepared in stages 1 and 2 to the aqueous phase and establishing the desired application viscosity by adding water.

2. Process for the preparation of aqueous radiation-curable coating materials from water-incompatible radiation-curable pre-coating materials A), the water-incompatibility of which is defined by a solubility at room temperature in water of < 10% by weight based on the aqueous formulation, comprising
(a) from 40 to 100% by weight of at least one oligomeric and/or polymeric water-incompatible binder having at least two ethylenically unsaturated double bonds per molecule,
(b) from 0 to 40% by weight of fillers and/or pigments,
(c) from 0 to 6% by weight of photoinitiators, and
(d) from 0 to 20% by weight of other auxiliaries and/or additives,
characterized in that successive process stages comprise:
1. formulating the pre-coating material A) from components (a) to (d) with simultaneous addition of from 0.2 to 5% by weight, based on the pre-coating material A), of a di- and/or polyamine B) having at least one primary and at least one tertiary amino group,
2. neutralizing the amino groups of component B) in the reaction product resulting from stage 1., which is obtained by a Michael addition during which no polymerization takes place, with an acid, and
3. transferring the water-soluble coating material prepared in stages 1 and 2 to the aqueous phase and establishing the desired application viscosity by adding water.

3. Process according to one of claims 1 or 2, characterized in that the water-incompatible pre-coating material A) comprises
from 50 to 95% by weight of component (a),
from 0 to 30% by weight of component (b),
from 3 to 5% by weight of component (c) and
from 0 to 20% by weight of component (d).

4. Process according to one of claims 1 to 3, characterized in that process stages 2 and 3 are combined into one process stage, this process stage following process stage 1.

5. Process according to one of claims 1 to 4, characterized in that in the 1st process stage from 1 to 3% by weight of component B), based on the water-incompatible pre-coating material A), are employed.

6. Process according to one of claims 1 to 5, characterized in that component B) is a diamine having a primary and a tertiary amino group.

7. Process according to one of claims 1 to 6, characterized in that component B) is an N,N-dialkylaminoalkylamine.

8. Process according to one of claims 1 to 7, characterized in that component (B) is N,N-dimethyl-1,3-diaminopropane.

9. Process according to one of claims 1 to 8, characterized in that the water-incompatible binder (a) employed comprises oligomers and/or polymers having at least two acrylic ester and/or methacrylic ester groups per molecule as units having ethylenically unsaturated double bonds.

10. Process according to one of claims 1 to 9, characterized in that the water-incompatible oligomeric binder (a) employed comprises esters of acrylic acid and/or methacrylic acid and trihydric to tetrahydric alcohols.

11. Process according to one of claims 1 to 10, characterized in that the water-incompatible polymeric binder (a) employed comprises polyether acrylate, polyester acrylate, polyether methacrylate and/or polyester methacrylate.

12. Aqueous radiation-curable coating materials which can be prepared in accordance with the process according to one of claims 1 to 11.

13. Use of the aqueous, radiation-curable coating materials according to claim 12 for the priming and/or covering coating of glass, wood, paper and plastic.

## Revendications

1. Procédé de préparation de matériaux de revêtement aqueux durcissables par rayonnement à partir de matériaux de prérevêtement A) incompatibles avec l'eau et durcissables par rayonnement, dont l'incompatibilité avec l'eau est définie par une solubilité dans l'eau à température ambiante < 10% en poids, par rapport à la formulation aqueuse, comprenant
(a) de 40 à 100% en poids d'au moins un liant oligomère et/ou polymère incompatible avec l'eau, ayant au moins deux doubles liaisons éthyléniquement insaturées par molécule,
(b) de 0 à 40% en poids de charges et/ou de pigments,
(c) de 0 à 6% en poids de photoamorceurs, et
(d) de 0 à 20% en poids d'autres auxiliaires et/ou additifs,
caractérisé en ce que les étapes de procédé successives comprennent :
1. l'addition au matériau de prérevêtement A) pré-formulé incompatible avec l'eau, de 0,2 à 5% en poids, par rapport au matériau de prérevêtement A), d'une di- et/ou polyamine B) ayant au moins un groupe amino primaire et au moins un groupe amino tertiaire,
2. la neutralisation des groupes amino du composant B) dans le produit de réaction résultant de l'étape 1, qui est obtenu par addition de Michael avec un acide, durant laquelle il ne se produit pas de polymérisation, et
3. le transfert du matériau de revêtement hydrosoluble préparé aux étapes 1 et 2 en phase aqueuse et l'établissement de la viscosité d'application souhaitée par addition d'eau.

2. Procédé de préparation de matériaux de revêtement aqueux durcissables par rayonnement à partir de matériaux de prérevêtement A) incompatibles avec l'eau et durcissables par rayonnement, dont l'incompatibilité avec l'eau est définie par une solubilité à température ambiante < 10% en poids, par rapport à la formulation aqueuse, comprenant
(a) de 40 à 100% en poids d'au moins un liant oligomère et/ou polymère incompatible avec l'eau, ayant au moins deux double liaisons éthyléniquement insaturées par molécule,
(b) de 0 à 40% en poids de charges et/ou de pigments,
(c) de 0 à 6% en poids de photoamorceurs, et
(d) de 0 à 20% en poids d'autres auxiliaires et/ou additifs,
caractérisé en ce que les étapes de procédé successives comprennent :
1. la formulation du matériau de prérevêtement A) à partir des composants (a) à (d) en ajoutant simultanément de 0,2 à 5% en poids, par rapport au matériau de prérevêtement A), d'une di- et/ou polyamine B) ayant au moins un groupe amino primaire et au moins un groupe amino tertiaire,
2. la neutralisation des groupes amino du composant B) dans le produit de réaction résultant de l'étape 1., qui est obtenu par addition de Michael avec un acide, durant laquelle il ne se produit pas de polymérisation, et
3. le transfert du matériau de prérevêtement hydrosoluble préparé aux étapes 1 et 2 en phase aqueuse et l'établissement de la viscosité d'application souhaitée par addition d'eau.

3. Procédé selon l'une quelconque des revendications 1 ou 2, caractérisé en ce que le matériau de prérevêtement A) incompatible avec l'eau comprend
de 50 à 95% en poids du composant (a),
de 0 à 30% en poids du composant (b),
de 3 à 5% en poids du composant (c), et
de 0 à 20% en poids du composant (d).

4. Procédé selon l'une quelconque des revendications 1 à 3, caractérisé en ce que les étapes de procédé 2 et 3 sont combinées en une étape de procédé, cette étape de procédé suivant l'étape de procédé 1.

5. Procédé selon l'une quelconque des revendications 1 à 4, caractérisé en ce que dans l'étape de procédé 1, on utilise de 1 à 3% en poids du composant B), par rapport au matériau de prérevêtement A) incompatible avec l'eau.

6. Procédé selon l'une quelconque des revendications 1 à 5, caractérisé en ce que le composant B) est une diamine ayant un groupe amino primaire et un groupe amino tertiaire.

7. Procédé selon l'une quelconque des revendications 1 à 6, caractérisé en ce que le composant B) est une N,N-dialkylaminoalkylamine.

8. Procédé selon l'une quelconque des revendications 1 à 7, caractérisé en ce que le composant B) est le N,N-diméthyl-1,3-diaminopropane.

9. Procédé selon l'une quelconque des revendications 1 à 8, caractérisé en ce que l'on utilise, en tant que liant (a) incompatible avec l'eau, des oligomères et/ou polymères ayant au moins deux groupes ester acryliques et/ou ester méthacryliques par molécule en tant que motifs ayant des double liaisons éthyléniquement insaturées.

10. Procédé selon l'une quelconque des revendications 1 à 9, caractérisé en ce que l'on utilise, en tant que liant (a) oligomère incompatible avec l'eau, des esters de l'acide acrylique et/ou de l'acide méthacrylique et des alcools tri- à tétrahydrique.

11. Procédé selon l'une quelconque des revendications 1 à 10, caractérisé en ce que l'on utilise, en tant que liant (a) polymère incompatible avec l'eau, un polyéther acrylate, un polyester acrylate, un polyéther méthacrylate et/ou un polyester méthacrylate.

12. Matériaux de revêtement aqueux durcissables par revêtement, qui peuvent être préparés conformément au procédé selon l'une quelconque des revendications 1 à 11.

13. Utilisation des matériaux de revêtements aqueux durcissables par rayonnement selon la revendication 12, pour le revêtement d'apprêtage et/ou de recouvrement du verre, du bois du papier et du plastique.
